# EUROPEAN PATENT SPECIFICATION

(11) **EP 3 059 272 B1**
(45) Date of publication and mention of the grant of the patent: **21.02.2018**
(21) Application number: 14854361.4
(22) Date of filing: 14.10.2014
(51) Int. Cl.: C08G 75/08, C08G 59/66, G02B 1/04

(54) **OPTICAL MATERIAL COMPOSITION AND OPTICAL MATERIAL USING SAME**
OPTISCHE MATERIALZUSAMMENSETZUNG UND OPTISCHES MATERIAL DAMIT
COMPOSITION DE MATÉRIAU OPTIQUE ET MATÉRIAU OPTIQUE L'UTILISANT

(30) Priority: 15.10.2013 JP 2013214479
(43) Date of publication of application: 24.08.2016
(73) Proprietor: Mitsubishi Gas Chemical Company, Inc., Tokyo 100-8324 (JP)
(72) Inventor: SHIMODA Naotsugu, Tokyo 125-8601 (JP); HORITA Akinobu, Tokyo 125-8601 (JP); KAMURA Teruo, Tokyo 125-8601 (JP); KOSHIISHI Eiji, Tokyo 100-8324 (JP)
(74) Representative: Müller-Boré & Partner Patentanwälte PartG mbB
(86) International application number: PCT/JP2014/077303
(87) International publication number: WO 2015/056665

(56) References cited:
- WO-A1-03/002632
- JP-A- H1 180 308
- JP-A- H11 124 363
- JP-A- 2006 003 624
- JP-A- 2006 131 724

## Description

### TECHNICAL FIELD

The present invention relates to a composition for optical materials, etc., and particularly relates to a composition for optical materials suitable for optical materials such as a plastic lens, a prism, an optical fiber, an information recording substrate, a filter and an optical adhesive, in particular a plastic lens, etc. More specifically, the present invention relates to a composition for optical materials containing a polythiol compound and a polyepoxy compound and/or a polyepisulfide compound, etc.

### BACKGROUND ART

An optical material made of a resin is lighter and less fragile compared to an optical material made of an inorganic material, and can be dyed. Therefore, recently, it has been rapidly and widely spread for applications such as an eyeglass lens and a camera lens.

A resin for optical materials having higher performance has been demanded. Specifically, a resin for optical materials having a higher refractive index, a higher Abbe number, a lower specific gravity, a higher heat resistance, etc. has been demanded. Responding to such a demand, various resins for optical materials have been developed and used.

Among such resins, resins obtained by polymerization and curing of a composition for optical materials containing a polythiol compound have been actively proposed. Examples thereof include polysulfide-based resins obtained by subjecting a polythiol compound and a polyepoxy compound and/or a polyepisulfide compound to a polymerization reaction as shown in Patent Documents 1 and 2. These resins are colorless and transparent and have a high refractive index, and are excellent in impact resistance, dye-affinity, processability, etc. Among such properties, transparency of resins is essential for optical materials Patent document 3 relates to optical materials for making plastic lenses comprising a polythiol and poly episulphide compound. Example 1 discloses a polymerisable composition comprising a polythiol, a polyepisulphide and a dialkyl amine catalyst.

However, when producing a resin for optical materials, white turbidity may be caused in a resin or optical material obtained by polymerization. In the case of intended use for optical materials, if white turbidity is caused after curing, all become defective products, resulting in a great loss. Accordingly, a technique of predicting the possibility of occurrence of white turbidity after curing and judging whether it is good or bad prior to curing is desired.

### PRIOR ART DOCUMENTS

### PATENT DOCUMENTS

Patent Document 1: Japanese Laid-Open Patent Publication No. H10-298287
Patent Document 2: International Publication WO89/10575
Patent Document 3: JP 2006-3624 A

### SUMMARY OF THE INVENTION

### PROBLEMS TO BE SOLVED BY THE INVENTION

The problem to be solved by the present invention is to provide a composition for optical materials containing a polythiol compound, wherein the possibility of occurrence of white turbidity in a resin after polymerization and curing can be predicted and judged and it is possible to judge whether it is good or bad, etc.

### MEANS FOR SOLVING THE PROBLEMS

The present inventors focused attention on the ammonium cation concentration, the thiocyanate anion concentration and the ion concentration product of ammonium cation and thiocyanate anion in a polythiol compound, and found that the above-described problem can be solved by a composition for optical materials containing a polythiol compound satisfying specific numerical ranges of the ammonium cation concentration, the thiocyanate anion concentration and the ion concentration product of ammonium cation and thiocyanate anion.

Specifically, the present invention is as follows:
<1> A composition for optical materials which comprises: a polythiol compound satisfying any one of the following i) to iii)
   i) the compound has an ammonium cation concentration of 0.1 to 150 µmol/kg,
   ii) the compound has a thiocyanate anion concentration of 0.1 to 300 µmol/kg, and
   iii) the compound has an ammonium cation concentration of 0.1 to 150 µmol/kg and a thiocyanate anion concentration of 0.1 to 300 µmol/kg, the product of the ammonium cation concentration and the thiocyanate anion concentration being 0.01 to 15000 (µmol/kg)²;
   and a polyepoxy compound and/or a polyepisulfide compound.
<2> The composition for optical materials according to item <1>, wherein the polythiol compound is at least one compound selected from the group consisting of pentaerythritol tetrakis(3-mercaptopropionate), 1,2-bis[(2-mercaptoethyl)thio]-3-mercaptopropane, bis(mercaptomethyl)-3,6,9-trithia-1,11-undecanedithiol, bis(mercaptomethyl) sulfide, bis(mercaptoethyl) sulfide, 1,3-bis(mercaptomethyl)benzene, 1,4-bis(mercaptomethyl)benzene, 1,1,3,3-tetrakis(mercaptomethylthio)propane and 2,5-bis(mercaptomethyl)-1,4-dithiane.
<3> A method for producing a composition for optical materials, which comprises mixing a polythiol compound satisfying any one of the following i) to iii):
   i) the compound has an ammonium cation concentration of 0.1 to 150 µmol/kg;
   ii) the compound has a thiocyanate anion concentration of 0.1 to 300 µmol/kg; and
   iii) the compound has an ammonium cation concentration of 0.1 to 150 µmol/kg and a thiocyanate anion concentration of 0.1 to 300 µmol/kg, the product of the ammonium cation concentration and the thiocyanate anion concentration being 0.01 to 15000 (µmol/kg)²;
   with a polyepoxy compound and/or a polyepisulfide compound.
<4> The method for producing a composition for optical materials according to item <3>, wherein the polythiol compound is at least one compound selected from the group consisting of pentaerythritol tetrakis(3-mercaptopropionate), 1,2-bis[(2-mercaptoethyl)thio]-3-mercaptopropane, bis(mercaptomethyl)-3,6,9-trithia-1,11-undecanedithiol, bis(mercaptomethyl) sulfide, bis(mercaptoethyl) sulfide, 1,3-bis(mercaptomethyl)benzene, 1,4-bis(mercaptomethyl)benzene, 1,1,3,3-tetrakis(mercaptomethylthio)propane and 2,5-bis(mercaptomethyl)-1,4-dithiane.
<5> An optical material obtained by polymerizing the composition for optical materials according to item <1> or <2>.

### ADVANTAGEOUS EFFECT OF THE INVENTION

According to the present invention, it is possible to provide a composition for optical materials containing a polythiol compound, etc., wherein it is possible to predict the possibility of occurrence of white turbidity after polymerization and curing and judge whether it is good or bad prior to polymerization and curing, which was difficult to be carried out by conventional techniques.

### EMBODIMENTS FOR CARRYING OUT THE INVENTION

The polythiol compound to be used in the present invention is not particularly limited and it is sufficient when the compound has at least two thiol groups in one molecule, but a polythiol compound, which is produced by reacting an organic halogen compound and/or an alcohol compound with a thiourea to obtain an isothiouronium salt and hydrolyzing the isothiouronium salt under basic conditions, is particularly preferably used. In order to obtain a polythiol compound with small amounts of thiocyanate ion and ammonium ion, for example, optimization of conditions in the hydrolysis process, washing process and distillation process, etc. can be employed. As more preferred conditions, setting the temperature of the hydrolysis process at 80°C or higher and/or washing with a strong acid (6N or more) in the washing process and/or carrying out the washing process after the distillation process can be employed. As even more preferred conditions, washing with a strong acid (6N or more) and/or carrying out the washing process after the distillation process can be employed. As particularly preferred conditions, carrying out the washing process after the distillation process can be employed.

Specific examples of the polythiol compound include: aliphatic polythiol compounds such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalate bis(2-mercaptoethylester), 2,3-dimercapto-1-propanol(2-mercaptoacetate), 2,3-dimercapto-1-propanol(3-mercaptopropionate), diethyleneglycol bis(2-mercaptoacetate), diethyleneglycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl)ether, ethyleneglycol bis(2-mercaptoacetate), ethyleneglycol bis(3-mercaptopropionate), trimethylolpropane bis(2-mercaptoacetate), trimethylolpropane bis(3-mercaptopropionate), pentaerythritol tetrakis(2-mercaptoacetate), pentaerythritol tetrakis(3-mercaptopropionate) and tetrakis(mercaptomethyl)methane;
aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol and 2,4-di(p-mercaptophenyl)pentane;
aromatic polythiol compounds containing a sulfur atom in addition to a mercapto group, such as 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene and 1,3,5-tris(mercaptoethylthio)-benzene and nuclear alkylated derivatives thereof;
aliphatic polythiol compounds containing a sulfur atom in addition to a mercapto group, such as bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropyl)ethane, 1,3-bis(mercaptomethylthio)propane, 1,3-bis(2-mercaptoethylthio)propane, 1,3-bis(3-mercaptopropylthio)propane, 1,2,3-tris(mercaptomethylthio)propane, 1,2,3-tris(2-mercaptoethylthio)propane, 1,2,3-tris(3-mercaptopropylthio)propane, 1,2-bis[(2-mercaptoethyl)thio]-3-mercaptopropane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, bis(mercaptomethyl)-3,6,9-trithia-1,11-undecanedithiol, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, bis(1,3-dimercaptopropyl) sulfide, 2,5-dimercapto-1,4-dithiane, 2,5-dimercaptomethyl-1,4-dithiane, 2,5-dimercaptomethyl-2,5-dimethyl-1,4-dithiane, bis(mercaptomethyl) disulfide, bis(mercaptoethyl) disulfide and bis(mercaptopropyl) disulfide, and esters of thioglycolates and mercaptopropionates thereof;
other aliphatic polythiol compounds containing a sulfur atom and an ester bond in addition to a mercapto group, such as hydroxymethylsulfide bis(2-mercaptoacetate), hydroxymethylsulfide bis(3-mercaptopropionate), hydroxyethylsulfide bis(2-mercaptoacetate), hydroxyethylsulfide bis(3-mercaptopropionate), hydroxypropylsulfide bis(2-mercaptoacetate), hydroxypropylsulfide bis(3-mercaptopropionate), hydroxymethyldisulfide bis(2-mercaptoacetate), hydroxymethyldisulfide bis(3-mercaptopropionate), hydroxyethyldisulfide bis(2-mercaptoacetate), hydroxyethyldisulfide bis(3-mercaptopropionate), hydroxypropyldisulfide bis(2-mercaptoacetate), hydroxypropyldisulfide bis(3-mercaptopropionate), 2-mercaptoethyl ether bis(2-mercaptoacetate), 2-mercaptoethylether bis(3-mercaptopropionate), 1,4-dithiane-2,5-diol bis(2-mercaptoacetate), 1,4-dithiane-2,5-diol bis(3-mercaptopropionate), bis(2-mercaptoethyl)thiodiglycolate, bis(2-mercaptoethyl)thiodipropionate, bis(2-mercaptoethyl)-4,4-thiodibutyrate, bis(2-mercaptoethyl)dithiodiglycolate, bis(2-mercaptoethyl)dithiodipropionate, bis(2-mercaptoethyl)-4,4-dithiodibutyrate, bis(2,3-dimercaptopropyl)thiodiglycolate, bis(2,3-dimercaptopropyl)thiodipropionate, bis(2,3-dimercaptopropyl)dithioglycolate and bis(2,3-dimercaptopropyl)dithiodipropionate;
heterocyclic compounds containing a sulfur atom in addition to a mercapto group, such as 3,4-thiophenedithiol and 2,5-dimercapto-1,3,4-thiadiazole;
compounds containing a hydroxy group in addition to a mercapto group, such as 2-mercaptoethanol, 3-mercapto-1,2-propanediol, glycerin di(mercaptoacetate), 1-hydroxy-4-mercaptocyclohexane, 2,4-dimercaptophenol, 2-mercaptohydroquinone, 4-mercaptophenol, 3,4-dimercapto-2-propanol, 1,3-dimercapto-2-propanol, 2,3-dimercapto-1-propanol, 1,2-dimercapto-1,3-butanediol, pentaerythritol tris(3-mercaptopropionate), pentaerythritol mono(3-mercaptopriopionate), pentaerythritol bis(3-mercaptopropionate), pentaerythritol tris(thioglycolate), dipentaerythritol pentakis(3 -mercaptopropionate), hydroxymethyl-tris(mercaptoethylthiomethyl)methane and 1-hydroxyethylthio-3 -mercaptoethylthiobenzene;
compounds having a dithioacetal or dithioketal skeleton, such as 1,1,3,3-tetrakis(mercaptomethylthio)propane, 1,1,2,2-tetrakis(mercaptomethylthio)ethane, 4,6-bis(mercaptomethylthio)-1,3-dithiacyclohexane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 2-(4,5-dimercapto-2-thiapentyl)-1,3-dithiacyclopentane, 2,2-bis(mercaptomethyl)-1,3-dithiacyclopentane, 2,5-bis(4,4-bis(mercaptomethylthio)-2-thiabutyl)-1,4-dithiane, 2,2-bis(mercaptomethylthio)-1,3-propanedithiol, 3-mercaptomethylthio-1,7-dimercapto-2,6-dithiaheptane, 3,6-bis(mercaptomethylthio)-1,9-dimercapto-2,5,8-trithianonane, 4,6-bis(mercaptomethylthio)-1,9-dimercapto-2,5,8-trithianonane, 3-mercaptomethylthio-1,6-dimercapto-2,5-dithiahexane, 2-(2,2-bis(mercaptomethylthio)ethyl)-1,3-dithiethane, 1,1,9,9-tetrakis(mercaptomethylthio)-5-(3,3-bis(mercaptomethylthio)-1-thiapropyl)-3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathian onadecane, 9-(2,2-bis(mercaptomethylthio)ethyl)-3,5,13,15-tetrakis(mercaptomethylthio)-1,17-dim ercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahe xadecane, 8-{bis(mercaptomethylthio)methyl}-3,4,12,13-tetrakis(mercaptomethylthio)-1,15-dimer capto-2,5,7,9,11,14-hexathiapentadecane, 4,6-bis{3,5-bis(mercaptomethylthio)-7-mercapto-2,6-dithiaheptylthio}-1,3-dithiane, 4-{3,5-bis(mercaptomethylthio)-7-mercapto-2,6-dithiaheptylthio}-6-mercaptomethylthi o-1,3-dithiane, 1,-bis{4-(6-mercaptomethylthio)-1,3-dithianylthio}-3,3-bis(mercaptomethylthio)propa ne, 1,3-bis{4-(6-mercaptomethylthio)-1,3-dithianylthio}-1,3-bis(mercaptomethylthio)propa ne, 1-{4-(6-mercaptomethylthio)-1,3-dithianylthio}-3-{2,2-bis(mercaptomethylthio)ethyl}-7,9-bis(mercaptomethylthio)-2,4,6,10-tetrathiaundecane, 1-{4-(6-mercaptomethylthio)-1,3-dithianylthio}-3-{2-(1,3-dithietanyl)}methyl-7,9-bis( mercaptomethylthio)-2,4,6,10-tetrathiaundecane, 1,5-bis{4-(6-mercaptomethylthio)-1,3-dithianylthio}-3-{2-(1,3-dithietanyl)}methyl-2,4-dithiapentane, 4,6-bis[3-{2-(1,3-dithietanyl)}methyl-5-mercapto-2,4-dithiapentylthio]-1,3-dithiane, 4,6-bis{4-(6-mercaptomethylthio)-1,3-dithianylthio}-1,3-dithiane, 4-{4-(6-mercaptomethylthio)-1,3-dithianylthio}-6-{4-(6-mercaptomethylthio)-1,3-dithia nylthio}-1,3-dithiane, 3-{2-(1,3-dithietanyl)}methyl-7,9-bis(mercaptomethylthio)-1,11-dimercapto-2,4,6,10-te trathiaundecane, 9-{2-(1,3-dithietanyl)}methyl-3,5,13,15-tetrakis(mercaptomethylthio)-1,17-dimercapto-2,6,8,10,12,16-hexathiaheptadecane, 3-{2-(1,3-dithietanyl)}methyl-7,9,13,15-tetrakis(mercaptomethylthio)-1,17-dimercapto-2,4,6,10,12,16-hexathiaheptadecane, 3,7-bis{2-(1,3-dithietanyl)}methyl-1,9-dimercapto-2,4,6,8-tetrathianonane, 4-{3,4,8,9-tetrakis(mercaptomethylthio)-11-mercapto-2,5,7,10-tetrathiaundecyl}-5-merc aptomethylthio-1,3-dithiolane, 4,5-bis{3,4-bis(mercaptomethylthio)-6-mercapto-2,5-dithiahexylthio}-1,3-dithiolane, 4-{3,4-bis(mercaptomethylthio)-6-mercapto-2,5-dithiahexylthio}-5-mercaptomethylthio -1,3-dithiolane, 4-{3-bis(mercaptomethylthio)methyl-5,6-bis(mercaptomethylthio)-8-mercapto-2,4,7-trit hiaoctyl}-5-mercaptomethylthio-1,3-dithiolane, 2-[bis{3,4-bis(mercaptomethylthio)-6-mercapto-2,5-dithiahexylthio}methyl]-1,3-dithiet hane, 2-{3,4-bis(mercaptomethylthio)-6-mercapto-2,5-dithiahexylthio}mercaptomethylthiome thyl-1,3-dithiethane, 2-{3,4,8,9-tetrakis(mercaptomethylthio)-11-mercapto-2,5,7,10-tetrathiaundecylthio}mer captomethylthiomethyl-1,3-dithiethane, 2-{3-bis(mercaptomethylthio)methyl-5,6-bis(mercaptomethylthio)-8-mercapto-2,4,7-trit hiaoctyl}mercaptomethylthiomethyl-1,3-dithiethane, 4,5-bis[1-{2-(1,3-dithietanyl)-3-mercapto-2-thiapropylthio]-1,3-dithiolane, 4-[1-{2-(1,3-dithietanyl)}-3-mercapto-2-thiapropylthio]-5-{1,2-bis(mercaptomethylthio )-4-mercapto-3-thiabutylthio}-1,3-dithiolane, 2-[bis{4-(5-mercaptomethylthio-1,3-dithiolanyl)thio}]methyl-1,3-dithiethane and 4-{4-(5-mercaptomethylthio-1,3 -dithiolanyl)thio}-5-[1-{2-(1,3-dithietanyl)}-3-mercapt o-2-thiapropylthio]-1,3-dithiolane, and oligomers thereof;
compounds having an orthotrithioformic ester skeleton, such as tris(mercaptomethylthio)methane, tris(mercaptoethylthio)methane, 1,1,5,5-tetrakis(mercaptomethylthio)-2,4-dithiapentane, bis(4,4-bis(mercaptomethylthio)-1,3-dithiabutyl)(mercaptomethylthio)methane, tris(4,4-bis(mercaptomethylthio)-1,3-dithiabutyl)methane, 2,4,6-tris(mercaptomethylthio)-1,3,5-trithiacyclohexane, 2,4-bis(mercaptomethylthio)-1,3,5-trithiacyclohexane, 1,1,3,3-tetrakis(mercaptomethylthio)-2-thiapropane, bis(mercaptomethyl)methylthio-1,3,5-trithiacyclohexane, tris((4-mercaptomethyl-2,5-dithiacyclohexyl-1-yl)methylthio)methane, 2,4-bis(mercaptomethylthio)-1,3-dithiacyclopentane, 2-mercaptoethylthio-4-mercaptomethyl-1,3-dithiacyclopentane, 2-(2,3-dimercaptopropylthio)-1,3-dithiacyclopentane, 4-mercaptomethyl-2-(2,3-dimercaptopropylthio)-1,3-dithiacyclopentane, 4-mercaptomethyl-2-(1,3-dimercapto-2-propylthio)-1,3-dithiacyclopentane, tris(2,2-bis(mercaptomethylthio)-1-thiaethyl)methane, trims(3,3 -bis(mercaptomethylthio)-2-thiapropyl)methane, tris(4,4-bis(mercaptomethylthio)-3-thiabutyl)methane, 2,4,6-tris(3,3-bis(mercaptomethylthio)-2-thiapropyl)-1,3,5-trithiacyclohexane and tetrakis(3,3-bis(mercaptomethylthio)-2-thiapropyl)methane, and oligomers thereof; and
compounds having an orthotetrathiocarbonic ester skeleton, such as 3,3'-di(mercaptomethylthio)-1,5-dimercapto-2,4-dithiapentane, 2,2'-di(mercaptomethylthio)-1,3-dithiacyclopentane, 2,7-di(mercaptomethyl)-1,4,5,9-tetrathiaspiro[4.4]nonane and 3,9-dimercapto-1,5,7,11-tetrathiaspiro[5.5]undecane, and oligomers thereof.

Note that the polythiol compound is not limited to the above-described exemplary compounds. Further, the above-described exemplary compounds may be used solely, or two or more of them may be used in combination.

Among the above-described exemplary compounds, preferred are pentaerythritol tetrakis(3-mercaptopropionate), 1,2-bis[(2-mercaptoethyl)thio]-3-mercaptopropane, bis(mercaptomethyl)-3,6,9-trithia-1,11-undecanedithiol, bis(mercaptomethyl) sulfide, bis(mercaptoethyl) sulfide, 1,3-bis(mercaptomethyl)benzene, 1,4-bis(mercaptomethyl)benzene, 1,1,3,3-tetrakis(mercaptomethylthio)propane and 2,5-bis(mercaptomethyl)-1,4-dithiane.

In the present invention, the ammonium cation concentration in the polythiol compound is obtained by sufficiently mixing the polythiol compound with pure water with stirring to extract ammonium cation contained in the polythiol compound into the water layer, and then carrying out the measurement using ion chromatography. In the present invention, the polythiol compound, which has an ammonium cation concentration of 0.1 to 150 µmol/kg, is preferably used. The ammonium cation concentration is more preferably 0.1 to 100 µmol/kg, and even more preferably 0.1 to 50 µmol/kg.

When the ammonium cation concentration is more than 150 µmol/kg, in many cases, white turbidity occurs in an optical material after polymerization and curing, and such an optical material is unusable. Accordingly, by measuring the ammonium cation concentration in the polythiol compound, the more or less of the possibility of occurrence of white turbidity in a resin to be obtained can be predicted and judged without polymerization and curing, and it is possible to judge whether or not the polythiol compound can be used in the resin composition for optical materials. The lower the value of the ammonium cation concentration in the polythiol compound is, the lower the rate of occurrence of white turbidity is. However, in consideration of economic costs in the purification process, etc., it is sufficient if the ammonium cation concentration is 0.1 µmol/kg or higher.

In the present invention, the thiocyanate anion concentration in the polythiol compound is obtained by sufficiently mixing the polythiol compound with pure water with stirring to extract thiocyanate anion contained in the polythiol compound into the water layer and then measuring the thiocyanate anion concentration based on coloring of iron (III)-thiocyanate complex generated by a reaction with iron (III) ions. In the present invention, the polythiol compound, which has a thiocyanate anion concentration of 0.1 to 300 µmol/kg, is preferably used. The thiocyanate anion concentration is more preferably 0.1 to 150 µmol/kg, and even more preferably 0.1 to 100 µmol/kg. The lower the value of the thiocyanate anion concentration in the polythiol compound is, the lower the rate of occurrence of white turbidity is. However, in consideration of economic costs in the purification process, etc., it is sufficient if the thiocyanate anion concentration is 0.1 µmol/kg or higher.

When the thiocyanate anion concentration is more than 300 µmol/kg, in many cases, white turbidity occurs in an optical material after polymerization and curing, and such an optical material is unusable. Accordingly, by measuring the thiocyanate anion concentration in the polythiol compound, the more or less of the possibility of occurrence of white turbidity in a resin to be obtained can be predicted and judged without polymerization and curing, and it is possible to judge whether or not the polythiol compound can be used in the resin composition for optical materials.

In the present invention, the ion concentration product of ammonium cation and thiocyanate anion contained in the polythiol compound is obtained by calculating the product of the ammonium cation concentration and the thiocyanate anion concentration measured using the aforementioned methods. The polythiol compound, which has an ion concentration product of 0.01 to 15000 (µmol/kg)², is preferably used. The ion concentration product is more preferably 0.01 to 7500 (µmol/kg)², even more preferably 0.01 to 5000 (µmol/kg)², and particularly preferably 0.01 to 2000 (µmol/kg)².

When the ion concentration product of ammonium cation and thiocyanate anion contained in the polythiol compound is more than 15000 (µmol/kg)², in many cases, white turbidity occurs in an optical material after polymerization and curing, and such an optical material is unusable. Accordingly, by calculating the ion concentration product of ammonium cation and thiocyanate anion contained in the polythiol compound, the more or less of the possibility of occurrence of white turbidity in a resin to be obtained can be predicted and judged without polymerization and curing, and it is possible to judge whether or not the polythiol compound can be used in the resin composition for optical materials.

In the present invention, the composition for optical materials containing the polythiol compound is a polymerizable composition containing the polythiol compound and a polyepoxy compound and/or a polyepisulfide compound for obtaining a polysulfide-based resin. The amount of the polythiol compound to be added in the present invention is not limited, but is preferably 1 to 50 parts by mass, more preferably 1 to 40 parts by mass, even more preferably 1 to 30 parts by mass, and most preferably 1 to 20 parts by mass relative to 100 parts by mass of the total of the composition for optical materials.

In the present invention, the polyepoxy compound and/or the polyepisulfide compound to be used for the polymerizable composition containing the polythiol compound and the polyepoxy compound and/or the polyepisulfide compound for obtaining a polysulfide-based resin are not particularly limited, and a compound having at least two epoxy groups in one molecule, a compound having at least two episulfide groups in one molecule and a compound having at least one epoxy group and at least one episulfide group in one molecule may be used.

Specific examples of the polyepoxy compound having at least two epoxy groups in one molecule include bisphenol F diglycidyl ether, bis(β-epoxypropyl)sulfide, bis(β-epoxypropyl)disulfide, bis(β-epoxypropyl)trisulfide, bis(β-epoxypropylthio)methane, 1,2-bis(β-epoxypropylthio)ethane, 1,3-bis(β-epoxypropylthio)propane, 1,2-bis((3-epoxypropylthio)propane, 1-(β-epoxypropylthio)-2-(β-epoxypropylthiomethyl)propane, 1,4-bis(β-epoxypropylthio)butane, 1,3-bis(β-epoxypropylthio)butane, 1-(β-epoxypropylthio)-3-(β-epoxypropylthiomethyl)butane, 1.5-bis(β-epoxypropylthio)pentane, 1-(β-epoxypropylthio)-4-(β-epoxypropylthiomethyl)pentane, 1,6-bis(β-epoxypropylthio)hexane, 1-(β-epoxypropylthio)-5-(β-epoxypropylthiomethyl)hexane, 1-(β-epoxypropylthio)-2-[(2-β-epoxypropylthioethyl)thio]ethane, 1-(β-epoxypropylthio)-2-[[2-(2-β-epoxypropylthioethyl)thioethyl]thio]ethane, tetrakis(β-epoxypropylthiomethyl)methane, 1,1,1-tris(β-epoxypropylthiomethyl)propane, 1,5-bis(β-epoxypropylthio)-2-(β-epoxypropylthiomethyl)-3-thiapentane, 1,5-bis(β-epoxypropylthio)-2,4-bis(β-epoxypropylthiomethyl)-3-thiapentane, 1-(β-epoxypropylthio)-2,2-bis(β-epoxypropylthiomethyl)-4-thiahexane, 1,5,6-tris(β-epoxypropylthio)-4-(β-epoxypropylthiomethyl)-3-thiahexane, 1,8-bis(β-epoxypropylthio)-4-(β-epoxypropylthiomethyl)-3,6-dithiaoctane, 1,8-bis(β-epoxypropylthio)-4,5-bis(β-epoxypropylthiomethyl)-3,6-dithiaoctane, 1,8-bis(β-epoxypropylthio)-4,4-bis(β-epoxypropylthiomethyl)-3,6-dithiaoctane, 1,8-bis(β-epoxypropylthio)-2,4,5-tris(β-epoxypropylthiomethyl)-3,6-dithiaoctane, 1.8-bis(β-epoxypropylthio)-2,5-bis(β-epoxypropylthiomethyl)-3,6-dithiaoctane, 1.9-bis(β-epoxypropylthio)-5-(β-epoxypropylthiomethyl)-5-[(2-β-epoxypropylthioethyl) thiomethyl]-3,7-dithianonane, 1,10-bis(β-epoxypropylthio)-5,6-bis[(2-β-epoxypropylthioethyl)thio]-3,6,9-trithiadecan e, 1,11-bis(β-epoxypropylthio)-4,8-bis(β-epoxypropylthiomethyl)-3,6,9-trithiaundecane, 1,11-bis(β-epoxypropylthio)-5,7-bis(β-epoxypropylthiomethyl)-3,6,9-trithiaundecane, 1,11-bis(β-epithiopropylthio)-5,7-[(2-β-epoxypropylthioethyl)thiomethyl]-3,6,9-trithiau ndecane, 1,11-bis(β-epoxypropylthio)-4,7-bis(β-epoxypropylthiomethyl)-3,6,9-trithiaundecane, tetra[2-(β-epoxypropylthio)acetylmethyl]methane, 1,1,1-tri[2-(β-epoxypropylthio)acetylmethyl]propane, tetra[2-(β-epoxypropylthiomethyl)acetylmethyl]methane, 1,1,1-tri[2-(β-epoxypropylthiomethyl)acetylmethyl]propane, bis(5,6-epoxy-3-thiahexyl) telluride, 2,3-bis(6,7-epoxy-1-tellura-4-thiaheptyl)-1-(3,4-epoxy-1-thiabutyl)propane, 1,1,3,3-tetrakis(4,5-epoxy-2-thiapentyl)-2-tellurapropane, bis(4,5-epoxy-2-thiapentyl)-3,6,9-tritelleraundecane-1,11-bis(3,4-epoxy-1-thiabutyl), 1,4-bis(3,4-epoxy-1-thiabutyl)-2,3-bis(6,7-epoxy-1-tellura-4-thiaheptyl)butane, tris(4,5-epoxy-2-thiapentyl)-3-tellura-6-thiaoctane-1,8-bis(3,4-epoxy-1-thiabutyl), 1,3- or 1,4-bis(β-epoxypropylthio)cyclohexane, 1,3- or 1,4-bis(β-epoxypropylthiomethyl)cyclohexane, bis[4-(p-epoxypropylthio)cyclohexyl]methane, 2,2-bis[4-(β-epoxypropylthio)cyclohexyl]propane, bis[4-(β-epoxypropylthio)cyclohexyl]sulfide, 2,5-bis(β-epoxypropylthiomethyl)-1,4-dithiane and 2,5-bis(β-epoxypropylthioethylthiomethyl)-1,4-dithiane.

Note that the epoxy compound is not limited to the above-described exemplary compounds. Further, the above-described exemplary compounds may be used solely, or two or more of them may be used in combination.

Among the above-described exemplary compounds, preferred are epoxy compounds having 2 epoxy groups in the molecule such as bisphenol F diglycidyl ether, bis(β-epoxypropyl)sulfide, bis(β-epoxypropyl)disulfide, bis(β-epoxypropylthio)methane, 1,2-bis(β-epoxypropylthio)ethane, 1,3-bis(β-epoxypropylthio)propane and 1,4-bis(β-epoxypropylthio)butane. Among them, bis(β-epoxypropyl)sulfide and/or bis(β-epoxypropyl)disulfide are more preferred, and bis(β-epoxypropyl)sulfide is most preferred.

Specific examples of the polyepisulfide compound having at least two episulfide groups in one molecule include bis(β-epithiopropyl)sulfide, bis(β-epithiopropyl)disulfide, bis(β-epithiopropyl)trisulfide, bis(β-epithiopropylthio)methane, 1,2-bis(β-epithiopropylthio)ethane, 1,3-bis(β-epithiopropylthio)propane, 1,2-bis(β-epithiopropylthio)propane, 1-(β-epithiopropylthio)-2-(β-epithiopropylthiomethyl)propane, 1,4-bis(β-epithiopropylthio)butane, 1,3 -bis(β-epithiopropylthio)butane, 1-(β-epithiopropylthio)-3-(β-epithiopropylthiomethyl)butane, 1,5-bis(β-epithiopropylthio)pentane, 1-(β-epithiopropylthio)-4-(β-epithiopropylthiomethyl)pentane, 1,6-bis(β-epithiopropylthio)hexane, 1-(β-epithiopropylthio)-5-(β-epithiopropylthiomethyl)hexane, 1-(β-epithiopropylthio)-2-[(2-β-epithiopropylthioethyl)thio]ethane, 1-(β-epithiopropylthio)-2-[[2-(2-β-epithiopropylthioethyl)thioethyl]thio]ethane, tetrakis(β-epithiopropylthiomethyl)methane, 1,1,1-tris(β-epithiopropylthiomethyl)propane, 1,5-bis(β-epithiopropylthio)-2-(β-epithiopropylthiomethyl)-3-thiapentane, 1,5-bis(β-epithiopropylthio)-2,4-bis(β-epithiopropylthiomethyl)-3-thiapentane, 1-(β-epithiopropylthio)-2,2-bis(β-epithiopropylthiomethyl)-4-thiahexane, 1,5,6-tris(β-epithiopropylthio)-4-(β-epithiopropylthiomethyl)-3-thiahexane, 1,8-bis(β-epithiopropylthio)-4-(β-epithiopropylthiomethyl)-3,6-dithiaoctane, 1,8-bis(β-epithiopropylthio)-4,5-bis(β-epithiopropylthiomethyl)-3,6-dithiaoctane, 1,8-bis(β-epithiopropylthio)-4,4-bis(β-epithiopropylthiomethyl)-3,6-dithiaoctane, 1,8-bis(β-epithiopropylthio)-2,4,5-tris(β-epithiopropylthiomethyl)-3,6-dithiaoctane, 1.8-bis(β-epithiopropylthio)-2,5-bis(β-epithiopropylthiomethyl)-3,6-dithiaoctane, 1.9-bis(β-epithiopropylthio)-5-(β-epithiopropylthiomethyl)-5-[(2-β-epithiopropylthioeth yl)thiomethyl]-3,7-dithianonane, 1.10-bis(β-epithiopropylthio)-5,6-bis[(2-β-epithiopropylthioethyl)thio]-3,6,9-trithiadeca ne, 1,11-bis(β-epithiopropylthio)-4,8-bis(β-epithiopropylthiomethyl)-3,6,9-trithiaundecane, 1,11-bis(β-epithiopropylthio)-5,7-bis(β-epithiopropylthiomethyl)-3,6,9-trithiaundecane, 1,11-bis(β-epithiopropylthio)-5,7-[(2-β-epithiopropylthioethyl)thiomethyl]-3,6,9-trithiau ndecane, 1,11-bis(β-epithiopropylthio)-4,7-bis(β-epithiopropylthiomethyl)-3,6,9-trithiaundecane, tetra[2-(β-epithiopropylthio)acetylmethyl]methane, 1,1,1-tri[2-(β-epithiopropylthio)acetylmethyl]propane, tetra[2-(β-epithiopropylthiomethyl)acetylmethyl]methane, 1,1,1-tri[2-(β-epithiopropylthiomethyl)acetylmethyl]propane, bis(5,6-epithio-3-thiahexyl) telluride, 2,3-bis(6,7-epithio-1-tellura-4-thiaheptyl)-1-(3,4-epithio-1-thiabutyl)propane, 1,1,3,3-tetrakis(4,5-epithio-2-thiapentyl)-2-tellurapropane, bis(4,5-epithio-2-thiapentyl)-3,6,9-tritelleraundecane-1,11-bis(3,4-epithio-1-thiabutyl), 1,4-bis(3,4-epithio-1-thiabutyl)-2,3-bis(6,7-epithio-1-tellura-4-thiaheptyl)butane, tris(4,5-epithio-2-thiapentyl)-3-tellura-6-thiaoctane-1,8-bis(3,4-epithio-1-thiabutyl), 1,3- or 1,4-bis(β-epithiopropylthio)cyclohexane, 1,3- or 1,4-bis(β-epithiopropylthiomethyl)cyclohexane, bis[4-(β-epithiopropylthio)cyclohexyl]methane, 2,2-bis[4-(β-epithiopropylthio)cyclohexyl]propane, bis [4-(β-epithiopropylthio)cyclohexyl] sulfide, 2.5-bis(β-epithiopropylthiomethyl)-1,4-dithiane and 2,5-bis(β-epithiopropylthioethylthiomethyl)-1,4-dithiane.

Note that the episulfide compound is not limited to the above-described exemplary compounds. Further, the above-described exemplary compounds may be used solely, or two or more of them may be used in combination.

Among the above-described exemplary compounds, preferred are episulfide compounds having 2 episulfide groups in the molecule such as bis(P-epithiopropyl)sulfide, bis(β-epithiopropyl)disulfide, bis(β-epithiopropylthio)methane, 1,2-bis(β-epithiopropylthio)ethane, 1,3-bis(β-epithiopropylthio)propane and 1,4-bis(β-epithiopropylthio)butane. Among them, bis(β-epithiopropyl)sulfide and/or bis(β-epithiopropyl)disulfide are more preferred, and bis(β-epithiopropyl)sulfide is most preferred.

Specific examples of the compound having at least one epoxy group and at least one episulfide group in one molecule include a compound obtained by substituting a part of epoxy groups of the aforementioned polyepoxy compound with episulfide groups. Such compounds may be used solely, or two or more of them may be used in combination. Alternatively, such compounds may be used by being mixed with the aforementioned polyepoxy compound and/or the polyepisulfide compound.

Regarding the ratio between the polythiol compound and the polyepoxy compound and/or the polyepisulfide compound to be used, SH group/(epoxy group + episulfide group) is usually 0.01 to 0.5, preferably 0.02 to 0.3, and more preferably 0.02 to 0.2. When SH group/(epoxy group + episulfide group) is less than 0.01, the thermal yellowing resistance of a polysulfide-based resin obtained by polymerization and curing may be significantly reduced. When SH group/(epoxy group + episulfide group) is more than 0.5, the heat resistance of a polysulfide-based resin obtained by polymerization and curing may be significantly reduced.

It is surely possible to add optional components such as a catalyst, an internal mold release agent, an ultraviolet absorber and a blueing agent to the composition for optical materials of the present invention according to need to further improve practicability of the material obtained.

In the present invention, as a catalyst for polymerization and curing of the composition for optical materials containing the polythiol compound and the polyepoxy compound and/or the polyepisulfide compound for obtaining a polysulfide-based resin, a publicly-known episulfide ring-opening polymerization catalyst is used without particular limitation, and examples thereof include amines, phosphines, quaternary ammonium salts and quaternary phosphonium salts. The amount of the polymerization catalyst to be added cannot be determined categorically because it varies depending on the components of the composition, the mixing ratio and the method for polymerization and curing, but the amount is usually 0.001% by mass to 5% by mass, preferably 0.002% by mass to 4% by mass, and most preferably 0.005% by mass to 3% by mass relative to the total amount of the composition for optical materials. When the amount of the polymerization catalyst to be added is more than 5% by mass, the refractive index and heat resistance of a cured product may be reduced and the cured product may be colored. When the amount is less than 0.001% by mass, the composition may be insufficiently cured, resulting in insufficient heat resistance.

Moreover, at the time of polymerization and curing, for the purpose of extension of the pot life, dispersion of heat generated by polymerization, etc., a polymerization modifier may be added according to need. Examples of the polymerization modifier include halides of silicon, germanium, tin and antimony. Preferred are chlorides of silicon, germanium, tin and antimony, and more preferred are chlorides of germanium, tin and antimony, which have an alkyl group. Most preferred specific examples of the polymerization modifier include dibutyltin dichloride, butyltin trichloride, dioctyltin dichloride, octyltin trichloride, dibutyldichlorogermanium, butyltrichlorogermanium, diphenyldichlorogermanium, phenyltrichlorogermanium and triphenylantimony dichloride. These polymerization modifiers may be used solely, or two or more of them may be used in combination. The amount of the polymerization modifier to be added is 0.001 to 5% by mass, preferably 0.002 to 5% by mass, and more preferably 0.005 to 3% by mass relative to the total amount of the composition for optical materials.

When the composition for optical materials of the present invention is not easily released from the mold after polymerization, it is possible to use or add a publicly-known external and/or internal mold release agent to improve the ability of a cured product obtained to be released from the mold. Examples of the mold release agent include fluorine-based non-ionic surfactants, silicon-based non-ionic surfactants, phosphate esters, acidic phosphate esters, oxyalkylene-type acidic phosphate esters, alkali metal salts of acidic phosphate esters, alkali metal salts of oxyalkylene-type acidic phosphate esters, metal salts of higher fatty acid, higher fatty acid esters, paraffin, wax, higher aliphatic amides, higher aliphatic alcohols, polysiloxanes and aliphatic amine ethylene oxide adducts. These substances may be used solely, or two or more of them may be used in combination. The amount of the mold release agent to be added is usually 0.0001 to 5% by mass of the total amount of the composition for optical materials.

Preferred examples of the ultraviolet absorber to be added to the composition for optical materials of the present invention include benzotriazole-based compounds. Specific examples of particularly preferred compounds include 2-(2-hydroxy-5-methylphenyl)-2H-benzotriazol, 5-chloro-2-(3,5-di-tert-butyl-2-hydroxyphenyl)-2H-benzotriazol, 2-(3-tert-butyl-2-hydroxy-5-methylphenyl)-5-chloro-2H-benzotriazole, 2-(3,5-di-tert-pentyl-2-hydroxyphenyl)-2H-benzotriazole, 2-(3,5-di-tert-butyl-2-hydroxyphenyl)-2H-benzotriazole, 2-(2-hydroxy-4-octyloxyphenyl)-2H-benzotriazole and 2-(2-hydroxy-5-tert-octylphenyl)-2H-benzotriazole. These substances may be used solely, or two or more of them may be used in combination. The amount of the ultraviolet absorber to be added is usually 0.01 to 10% by mass of the total amount of the composition for optical materials.

Preferred examples of the blueing agent to be added to the composition for optical materials of the present invention include anthraquinone-based compounds. These substances may be used solely, or two or more of them may be used in combination. The amount of the blueing agent to be added is usually 0.0001 to 5% by mass of the total amount of the composition for optical materials.

In the present invention, the optical material made of the polysulfide-based resin obtained by polymerization and curing of the composition for optical materials containing the polythiol compound is usually produced by cast molding and polymerization. Specifically, the polythiol compound is mixed with the polyepoxy compound and/or the polyepisulfide compound. The obtained mixture (composition for optical materials) is subjected to defoaming by an appropriate method according to need, and then injected into a mold for optical materials and usually heated gradually from a low temperature to a high temperature to be polymerized. After that, it is released from the mold, thereby obtaining the optical material.

In the present invention, the composition for optical materials is preferably subjected to the deaeration treatment before injected into a mold for optical materials. The deaeration treatment is carried out under reduced pressure before, during or after mixing a compound which can react with a part or all of the components of the composition, a polymerization catalyst and an additive. Preferably, the deaeration treatment is carried out under reduced pressure during or after mixing. The treatment conditions are as follows: under a reduced pressure of 0.001 to 50 torr; 1 minute to 24 hours; and 0°C to 100°C. The degree of pressure reduction is preferably 0.005 to 25 torr, and more preferably 0.01 to 10 torr. The degree of pressure reduction may be varied within these ranges. The deaeration time is preferably 5 minutes to 18 hours, and more preferably 10 minutes to 12 hours. The temperature at the time of deaeration is preferably 5 to 80°C, more preferably 10 to 60°C, and the temperature may be varied within these ranges. The operation of renewing the interface of the resin composition by means of stirring, blowing a gas, vibration caused by ultrasonic wave or the like during the deaeration treatment is preferable in terms of the enhancement of the deaeration effect.

In addition, it is preferred to filter impurities and the like from the composition for optical materials and/or respective raw materials before mixing to be purified using a filter having a pore diameter of 0.05 to 10 µm for further improving the quality of the optical material of the present invention.

The composition for optical materials after the above-described reaction and treatment is injected into a mold made of glass or metal, and a polymerization and curing reaction is promoted by heating or irradiation with active energy ray such as ultraviolet light, and after that, a product obtained is released from the mold. The optical material is produced in this way. The composition for optical materials is preferably polymerized and cured by heating to produce an optical material. In this case, the curing time is 0.1 to 200 hours, usually 1 to 100 hours, and the curing temperature is -10 to 160°C, usually 0 to 140°C. The polymerization may be conducted by carrying out a step of holding the composition at a predetermined polymerization temperature for a predetermined amount of time, a step of increasing the temperature at a rate of 0.1 °C to 100°C/h and a step of decreasing the temperature at a rate of 0.1 °C to 100°C/h, or a combination of these steps. Further, in the method for producing the optical material of the present invention, it is preferred to anneal the cured product at a temperature of 50 to 150°C for about 10 minutes to 5 hours after the completion of the polymerization in terms of eliminating distortion of the optical material.

The polysulfide-based resin produced by the method of the present invention is characterized in that it has excellent transparency and is free of white turbidity, and further has good color phase. Accordingly, the resin is suitably used as an optical material for lenses, prisms, etc. The resin is particularly suitably used for lenses such as eyeglass lenses and camera lenses.

Further, the optical material may be subjected to physical and chemical treatments such as surface polishing, antistatic treatment, hard coat treatment, non-reflection coat treatment, dyeing treatment and photochromic treatment for the purpose of antireflection, imparting high hardness, improving abrasive resistance, improving chemical resistance, imparting antifog properties, imparting fashionability or the like according to need.

### EXAMPLES

Hereinafter, the present invention will be specifically described by way of working examples, but the present invention is not limited thereto. Evaluations were carried out in manners described below.

### <Concentration of ammonium cation contained in polythiol compound>

50 g of the polythiol compound and 50 g of pure water were put into a glass vial, the vial was stopped airtightly, and then the materials were sufficiently mixed with stirring using a shaker. After that, it was allowed to stand until the polythiol compound layer and the water layer were sufficiently separated from each other, the ammonium cation concentration in the water layer was measured using ion chromatography, and the amount of ammonium cation (mol) contained per 1 kg of the polythiol compound was calculated to obtain the ammonium cation concentration [NH₄⁺].

### <Concentration of thiocyanate anion contained in polythiol compound>

50 g of the polythiol compound and 50 g of pure water were put into a glass vial, the vial was stopped airtightly, and then the materials were sufficiently mixed with stirring using a shaker. After that, it was allowed to stand until the polythiol compound layer and the water layer were sufficiently separated from each other, the thiocyanate anion concentration in the water layer was measured using a "portable multi-parameter water quality meter PF-12" manufactured by MACHEREY-NAGEL and a "reagent of thiocyanic acid test NANOCOLOR Tube Test Thiocyanate 50" manufactured by MACHEREY-NAGEL, and the amount of thiocyanate anion (mol) contained per 1 kg of the polythiol compound was calculated to obtain the thiocyanate anion concentration [SCN⁻].

### <Ion concentration product of ammonium cation and thiocyanate anion contained in polythiol compound>

The product of the ammonium cation concentration and the thiocyanate anion concentration measured using the aforementioned methods [NH₄⁺] [SCN⁻] was calculated.

### <Transparency (white turbidity) of resin>

The presence or absence of white turbidity in the optical material (optical lens) produced by polymerization of the composition for optical materials was observed under a fluorescent light in a dark room. In this regard, 100 optical lenses were produced, and the evaluation was conducted on the below-described 5-point scale. A, B and C are regarded as acceptable.
A: Among 100 optical lenses, there is no optical lens having white turbidity.
B: 1 or more and less than 3 out of 100 optical lenses have white turbidity.
C: 3 or more and less than 5 out of 100 optical lenses have white turbidity.
D: 5 or more and less than 10 out of 100 optical lenses have white turbidity.
E: 10 or more out of 100 optical lenses have white turbidity.

### <Color tone of optical material (YI value)>

The optical material in the form of a circular flat plate (thickness: 2.5 mm, ϕ: 60 mm) was produced and the YI value thereof was measured using a spectroscopic colorimeter (Color Techno System Corporation, JS555).

Regarding the polythiol compositions used in the Examples and Comparative Examples, a suitably synthesized product or commercially-available polythiol compound was used directly, or a product obtained by subjecting such a polythiol compound to one or a plurality of techniques selected from water washing, acid washing, purification by distillation, etc. to decrease the ammonium cation concentration and the thiocyanate anion concentration was used. Further, a polythiol compound obtained by adjusting ion concentrations by means of appropriate mixing was also used.

### <Examples of synthesis of polythiol compound>

### Synthesis of normal 1,3-bis(mercaptomethyl)benzene (Compound a-2)

In a 1L four-neck reaction flask equipped with a stirring machine, a reflux cooling tube, a nitrogen gas purge tube and a thermometer, 74.1 g of m-xylylene dichloride, 67.2 g of thiourea and 270 g of water were mixed together, and the mixture was heated to reflux for 2.5 hours. The mixture was cooled to room temperature, and then 134.1 g of 50% aqueous solution of sodium hydroxide was added thereto under nitrogen atmosphere, and the mixture was heated to reflux for 2 hours. Next, the reaction solution was cooled to 40°C, dilute hydrochloric acid was added thereto until pH became 3, and subsequently the mixture was stirred for 30 minutes to carry out neutralization. After the reaction was completed, extraction was carried out with 360 mL of toluene, and then toluene and a slight amount of water were removed under reduced pressure with heating, thereby obtaining 68.7 g of a polythiol composition containing m-xylylene dithiol. In this polythiol composition, the ammonium cation concentration [NH₄⁺] was 448 µmol/kg and the thiocyanate anion concentration [SCN⁻] was 612 µmol/kg.

### Synthesis 1 of 1,3-bis(mercaptomethyl)benzene (Compound a-2) in which the ammonium cation concentration and the thiocyanate anion concentration are decreased

The process was carried out as described above to the step of extraction with toluene and the step of removal of toluene and a slight amount of water under reduced pressure with heating. After that, the obtained polythiol composition containing m-xylylene dithiol was purified by distillation and then washed with water, and purified by distillation again. The weight of the obtained polythiol composition was 55.0 g. In this polythiol composition, the ammonium cation concentration [NH₄⁺] was 10 µmol/kg and the thiocyanate anion concentration [SCN⁻] was 42 µmol/kg.

### Synthesis 2 of 1,3-bis(mercaptomethyl)benzene (Compound a-2) in which the ammonium cation concentration and the thiocyanate anion concentration are decreased

Synthesis was carried out in a manner similar to that for normal 1,3-bis(mercaptomethyl)benzene to the step of extraction with toluene. After that, the toluene solution was washed with 6N hydrochloric acid and then water washing was carried out, and after that, toluene and a slight amount of water were removed under reduced pressure with heating. The weight of the obtained polythiol composition was 58.0 g. In this polythiol composition, the ammonium cation concentration [NH₄⁺] was 30 µmol/kg and the thiocyanate anion concentration [SCN⁻] was 66 µmol/kg.

### Synthesis 3 of 1,3-bis(mercaptomethyl)benzene (Compound a-2) in which the ammonium cation concentration and the thiocyanate anion concentration are decreased

Synthesis was carried out in a manner similar to that for normal 1,3-bis(mercaptomethyl)benzene, except that the temperature of the hydrolysis process was kept at 80°C or higher, thereby obtaining 66.3 g of a polythiol composition containing m-xylylene dithiol. In this polythiol composition, the ammonium cation concentration [NH₄⁺] was 39 µmol/kg and the thiocyanate anion concentration [SCN⁻] was 153 µmol/kg.

### Synthesis of normal 1,2-bis[(2-mercaptoethyl)thio]-3-mercaptopropane (Compound a-3)

76.0 g of water and 90.0 g (1.08 mol) of aqueous solution of sodium hydroxide (48% by mass) were put into a 2L four-neck reaction flask equipped with a stirring machine, a reflux cooling tube, a nitrogen gas purge tube and a thermometer. 169 g (2.16 mol) of 2-mercaptoethanol was added dropwise thereto at 30°C over 30 minutes, and after that, 99.9 g (1.08 mol) of epichlorohydrin was added dropwise thereto at the same temperature over 3 hours, and the mixture was matured for 1 hour. Next, 450.1 g (4.32 mol) of water containing hydrochloric acid (36% by mass) and 304.5 g (4.00 mol) of thiourea were added thereto, and the mixture was refluxed at 110°C for 8 hours to provide a thiouronium salt. After it was cooled to 50°C, 450.0 g of toluene and 298 g (5.21 mol) of aqueous solution of ammonia (28% by mass) were added thereto to perform hydrolysis, thereby obtaining a toluene solution of polythiol containing 1,2-bis[(2-mercaptoethyl)thio]-3-mercaptopropane as the main component. The toluene solution was washed with water, and toluene and a slight amount of water were removed under reduced pressure with heating. After that, it was filtered, thereby obtaining 271.2 g of a polythiol composition containing a 1,2-bis[(2-mercaptoethyl)thio]-3-mercaptopropane compound as the main component. In this polythiol composition, the ammonium cation concentration [NH₄⁺] was 223 µmol/kg and the thiocyanate anion concentration [SCN⁻] was 356 µmol/kg.

### Synthesis of 1,2-bis[(2-mercaptoethyl)thio]-3-mercaptopropane (Compound a-3) in which the ammonium cation concentration and the thiocyanate anion concentration are decreased

Synthesis was carried out in a manner similar to that for normal 1,2-bis[(2-mercaptoethyl)thio]-3-mercaptopropane described above until a toluene solution of polythiol was obtained. After that, the toluene solution was washed with 6N hydrochloric acid and then water washing was carried out, and toluene and a slight amount of water were removed under reduced pressure with heating. After that, it was filtered, thereby obtaining 268.3 g of a polythiol composition containing a 1,2-bis[(2-mercaptoethyl)thio]-3-mercaptopropane compound as the main component. In this polythiol composition, the ammonium cation concentration [NH₄⁺] was 8 µmol/kg and the thiocyanate anion concentration [SCN⁻] was 14 µmol/kg.

### Examples 1-6

The composition for optical materials and the optical material of the present invention were prepared according to the production method 1 described below using pentaerythritol tetrakis(3-mercaptopropionate) (hereinafter referred to as Compound a-1), wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 1. The results are shown in Table 1.

### Examples 7-12

The composition for optical materials and the optical material of the present invention were prepared according to the production method 2 described below using Compound a-1, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 1. The results are shown in Table 1.

### Examples 13-15

The composition for optical materials and the optical material of the present invention were prepared according to the production method 3 described below using Compound a-1, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 1. The results are shown in Table 1.

### Examples 16-18

The composition for optical materials and the optical material of the present invention were prepared in a manner similar to that of the production method 1 described below, except that 1,3-bis(mercaptomethyl)benzene (hereinafter referred to as Compound a-2) was used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 1. The results are shown in Table 1.

### Examples 19-25

The composition for optical materials and the optical material of the present invention were prepared according to the production method 2 described below using Compound a-2, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 1. The results are shown in Table 1.

### Examples 26-28

The composition for optical materials and the optical material of the present invention were prepared according to the production method 3 described below using Compound a-2, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 1. The results are shown in Table 1.

### Examples 29-31

The composition for optical materials and the optical material of the present invention were prepared in a manner similar to that of the production method 1 described below, except that 1,2-bis[(2-mercaptoethyl)thio]-3-mercaptopropane (hereinafter referred to as Compound a-3) was used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 2. The results are shown in Table 2.

### Examples 32-35

The composition for optical materials and the optical material of the present invention were prepared according to the production method 2 described below using Compound a-3, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 2. The results are shown in Table 2.

### Examples 36-39

The composition for optical materials and the optical material of the present invention were prepared according to the production method 3 described below using Compound a-3, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 2. The results are shown in Table 2.

### Examples 40-42

The composition for optical materials and the optical material of the present invention were prepared in a manner similar to that of the production method 2 described below, except that bis(mercaptoethyl) sulfide (hereinafter referred to as Compound a-4) was used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 2. The results are shown in Table 2.

### Examples 43-45

The composition for optical materials and the optical material of the present invention were prepared in a manner similar to that of the production method 2 described below, except that 2,5-bis(mercaptomethyl)-1,4-dithiane (hereinafter referred to as Compound a-5) was used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 2. The results are shown in Table 2.

### Examples 46-50

The composition for optical materials and the optical material of the present invention were prepared in a manner similar to that of the production method 2 described below, except that 1,1,3,3-tetrakis(mercaptomethylthio)propane (hereinafter referred to as Compound a-6) was used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 2. The results are shown in Table 2.

### Examples 51-55

The composition for optical materials and the optical material of the present invention were prepared according to the production method 3 described below using Compound a-6, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 2. The results are shown in Table 2.

### Examples 56-60

The composition for optical materials and the optical material of the present invention were prepared in a manner similar to that of the production method 2 described below, except that Compound a-1 and Compound a-2 were used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 3. The results are shown in Table 3.

### Example 61

The composition for optical materials and the optical material of the present invention were prepared in a manner similar to that of the production method 3 described below, except that Compound a-1 and Compound a-2 were used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 3. The results are shown in Table 3.

### Examples 62-64

The composition for optical materials and the optical material of the present invention were prepared in a manner similar to that of the production method 2 described below, except that Compound a-2 and Compound a-3 were used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 3. The results are shown in Table 3.

### Example 65

The composition for optical materials and the optical material of the present invention were prepared in a manner similar to that of the production method 2 described below, except that Compound a-2 and Compound a-6 were used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 3. The results are shown in Table 3.

### Example 66

The composition for optical materials and the optical material of the present invention were prepared in a manner similar to that of the production method 3 described below, except that Compound a-2 and Compound a-6 were used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 3. The results are shown in Table 3.

### Example 67

The composition for optical materials and the optical material of the present invention were prepared in a manner similar to that of the production method 2 described below, except that Compound a-3 and Compound a-6 were used, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 3. The results are shown in Table 3.

### Comparative Examples 1 and 2

The composition for optical materials and the optical material of the Comparative Examples were prepared according to the production method 1 described below using Compound a-1, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

### Comparative Examples 3 and 4

The composition for optical materials and the optical material of the Comparative Examples were prepared according to the production method 1 described below using Compound a-2, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4 (note that in Comparative Example 4, it was impossible to obtain a cured product).

### Comparative Examples 5-7

The composition for optical materials and the optical material of the Comparative Examples were prepared according to the production method 2 described below using Compound a-2, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4 (note that in Comparative Example 7, it was impossible to obtain a cured product).

### Comparative Example 8

The composition for optical materials and the optical material of the Comparative Examples were prepared according to the production method 3 described below using Compound a-2, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

### Comparative Example 9

The composition for optical materials and the optical material of the Comparative Examples were prepared according to the production method 2 described below using Compound a-3, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

### Comparative Example 10

The composition for optical materials and the optical material of the Comparative Examples were prepared according to the production method 2 described below using Compound a-4, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

### Comparative Example 11

The composition for optical materials and the optical material of the Comparative Examples were prepared according to the production method 2 described below using Compound a-5, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

### Comparative Example 12

The composition for optical materials and the optical material of the Comparative Examples were prepared according to the production method 2 described below using Compound a-6, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

### Comparative Example 13

The composition for optical materials and the optical material of the Comparative Examples were prepared according to the production method 2 described below using Compound a-1 and Compound a-2, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

### Comparative Example 14

The composition for optical materials and the optical material of the Comparative Examples were prepared according to the production method 2 described below using Compound a-2 and Compound a-3, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

### Comparative Example 15

The composition for optical materials and the optical material of the Comparative Examples were prepared according to the production method 2 described below using Compound a-3 and Compound a-6, wherein values of parts by weight, the ammonium cation concentration [NH₄⁺], the thiocyanate anion concentration [SCN⁻] and the product of the ammonium cation concentration and the thiocyanate anion concentration [NH₄⁺] [SCN⁻] are as described in Table 4. The results are shown in Table 4.

The details of the production methods used in the above-described Examples and Comparative Examples are as described below.

### <Production method 1>

95 parts by weight of bisphenol F diglycidyl ether as an epoxy resin (hereinafter referred to as Compound b-1) (epoxy equivalent: 174) (values are according to Tables 1-4) was mixed with 5 parts by weight of pentaerythritol tetrakis(3-mercaptopropionate) (Compound a-1) (values are according to Tables 1-4), and 0.6 parts by mass of trimethylamine and 0.08 parts by mass of dibutyl acid phosphate as an internal mold release agent were added thereto to obtain a homogenous mixture. After that, this composition was injected into a glass mold for lenses and left at room temperature for 2 hours to be polymerized and cured. After that, it was released from the mold, thereby obtaining an optical material.

### <Production method 2>

With 5 parts by weight of pentaerythritol tetrakis(3-mercaptopropionate) (Compound a-1) (values are according to Tables 1-4) and 95 parts by weight of bis(β-epithiopropyl)sulfide (hereinafter referred to as Compound b-2) (values are according to Tables 1-4) (100 parts by weight in total), 0.5 parts by weight of 2-diethylaminoethanol as a catalyst was mixed, and it was stirred at room temperature to obtain a homogeneous solution. After that, this composition was injected into a glass mold for lenses and polymerized and cured with the temperature being elevated from 10°C to 120°C over 22 hours in an oven. After that, it was released from the mold, thereby obtaining an optical material.

### <Production method 3>

With 5 parts by weight of pentaerythritol tetrakis(3-mercaptopropionate) (Compound a-1) (values are according to Tables 1-4) and 95 parts by weight of bis(β-epithiopropyl)disulfide (hereinafter referred to as Compound b-3) (values are according to Tables 1-4) (100 parts by weight in total), 0.5 parts by weight of 2-diethylaminoethanol as a catalyst was mixed, and it was stirred at room temperature to obtain a homogeneous solution. After that, this composition was injected into a glass mold for lenses and polymerized and cured with the temperature being elevated from 10°C to 120°C over 22 hours in an oven. After that, it was released from the mold, thereby obtaining an optical material.

**Table 1**

| | Composition (parts by weight) | | Thiol compound | | | Optical material |
|---|---|---|---|---|---|---|
| | Thiol compound | (b) compound | [NH₄⁺] µmol/kg | [SCN⁻] µmol/kg | [NH₄⁺] [SCN⁻] (µmol/kg)² | White turbidity |
| Example 1 | a-1 (5.0) | b-1 (95.0) | 26 | 36 | 936 | A |
| Example 2 | a-1 (10.0) | b-1 (90.0) | 26 | 36 | 936 | A |
| Example 3 | a-1 (20.0) | b-1 (80.0) | 26 | 36 | 936 | A |
| Example 4 | a-1 (20.0) | b-1 (80.0) | 43 | 95 | 4085 | B |
| Example 5 | a-1 (20.0) | b-1 (80.0) | 41 | 160 | 6560 | C |
| Example 6 | a-1 (30.0) | b-1 (70.0) | 26 | 36 | 936 | A |
| Example 7 | a-1 (5.0) | b-2 (95.0) | 26 | 36 | 936 | A |
| Example 8 | a-1 (5.0) | b-2 (95.0) | 43 | 95 | 4085 | B |
| Example 9 | a-1 (10.0) | b-2 (90.0) | 26 | 36 | 936 | A |
| Example 10 | a-1 (20.0) | b-2 (80.0) | 26 | 36 | 936 | A |
| Example 11 | a-1 (30.0) | b-2 (70.0) | 26 | 36 | 936 | A |
| Example 12 | a-1 (40.0) | b-2 (60.0) | 26 | 36 | 936 | B |
| Example 13 | a-1 (5.0) | b-3 (95.0) | 26 | 36 | 936 | A |
| Example 14 | a-1 (10.0) | b-3 (90.0) | 26 | 36 | 936 | A |
| Example 15 | a-1 (20.0) | b-3 (80.0) | 26 | 36 | 936 | A |
| Example 16 | a-2 (5.0) | b-1 (95.0) | 10 | 42 | 420 | A |
| Example 17 | a-2 (5.0) | b-1 (95.0) | 30 | 66 | 1980 | A |
| Example 18 | a-2 (10.0) | b-1 (90.0) | 10 | 42 | 420 | A |
| Example 19 | a-2 (5.0) | b-2 (95.0) | 10 | 42 | 420 | A |
| Example 20 | a-2 (5.0) | b-2 (95.0) | 30 | 66 | 1980 | A |
| Example 21 | a-2 (5.0) | b-2 (95.0) | 52 | 85 | 4420 | B |
| Example 22 | a-2 (5.0) | b-2 (95.0) | 39 | 153 | 5967 | B |
| Example 23 | a-2 (10.0) | b-2 (90.0) | 10 | 42 | 420 | A |
| Example 24 | a-2 (10.0) | b-2 (90.0) | 30 | 66 | 1980 | A |
| Example 25 | a-2 (20.0) | b-2 (80.0) | 10 | 42 | 420 | A |
| Example 26 | a-2 (5.0) | b-3 (95.0) | 30 | 66 | 1980 | A |
| Example 27 | a-2 (10.0) | b-3 (90.0) | 30 | 66 | 1980 | A |
| Example 28 | a-2 (20.0) | b-3 (80.0) | 30 | 66 | 1980 | B |

**Table 2**

| | Composition (parts by weight) | | Thiol compound | | | Optical material |
|---|---|---|---|---|---|---|
| | Thiol compound | (b) compound | [NH₄⁺] µmol/kg | [SCN⁻] µmol/kg | [NH₄⁺] [SCN⁻] (µmol/kg)² | White turbidity |
| Example 29 | a-3 (5.0) | b-1 (95.0) | 8 | 14 | 112 | A |
| Example 30 | a-3 (5.0) | b-1 (95.0) | 22 | 57 | 1254 | A |
| Example 31 | a-3 (10.0) | b-1 (90.0) | 8 | 14 | 112 | A |
| Example 32 | a-3 (5.0) | b-2 (95.0) | 8 | 14 | 112 | A |
| Example 33 | a-3 (10.0) | b-2 (90.0) | 8 | 14 | 112 | A |
| Example 34 | a-3 (20.0) | b-2 (80.0) | 8 | 14 | 112 | A |
| Example 35 | a-3 (30.0) | b-2 (70.0) | 8 | 14 | 112 | A |
| Example 36 | a-3 (5.0) | b-3 (95.0) | 8 | 14 | 112 | A |
| Example 37 | a-3 (5.0) | b-3 (95.0) | 25 | 137 | 3425 | B |
| Example 38 | a-3 (10.0) | b-3 (90.0) | 8 | 14 | 112 | A |
| Example 39 | a-3 (20.0) | b-3 (80.0) | 8 | 14 | 112 | A |
| Example 40 | a-4 (5.0) | b-2 (95.0) | 16 | 38 | 608 | A |
| Example 41 | a-4 (5.0) | b-2 (95.0) | 29 | 115 | 3335 | B |
| Example 42 | a-4 (10.0) | b-2 (90.0) | 16 | 38 | 608 | A |
| Example 43 | a-5 (5.0) | b-2 (95.0) | 10 | 44 | 440 | A |
| Example 44 | a-5 (10.0) | b-2 (90.0) | 10 | 44 | 440 | A |
| Example 45 | a-5 (20.0) | b-2 (80.0) | 10 | 44 | 440 | A |
| Example 46 | a-6 (5.0) | b-2 (95.0) | 16 | 54 | 864 | A |
| Example 47 | a-6 (5.0) | b-2 (95.0) | 40 | 105 | 4200 | B |
| Example 48 | a-6 (10.0) | b-2 (90.0) | 16 | 54 | 864 | A |
| Example 49 | a-6 (20.0) | b-2 (80.0) | 16 | 54 | 864 | A |
| Example 50 | a-6 (30.0) | b-2 (70.0) | 16 | 54 | 864 | A |
| Example 51 | a-6 (5.0) | b-3 (95.0) | 16 | 54 | 864 | A |
| Example 52 | a-6 (5.0) | b-3 (95.0) | 40 | 105 | 4200 | B |
| Example 53 | a-6 (10.0) | b-3 (90.0) | 16 | 54 | 864 | A |
| Example 54 | a-6 (20.0) | b-3 (80.0) | 16 | 54 | 864 | A |
| Example 55 | a-6 (30.0) | b-3 (70.0) | 16 | 54 | 864 | A |

**Table 3**

| | Composition (parts by weight) | | Thiol compound | | | Optical material |
|---|---|---|---|---|---|---|
| | Thiol compound | (b) compound | [NH₄⁺] µmol/kg | [SCN⁻] µmol/kg | [NH₄⁺] [SCN⁻] (µmol/kg)² | White turbidity |
| Example 56 | a-1 (2.5) | b-2 (95.0) | 18 | 39 | 702 | A |
| | a-2 (2.5) | | | | | |
| Example 57 | a-1 (2.5) | b-2 (95.0) | 28 | 51 | 1428 | B |
| | a-2 (2.5) | | | | | |
| Example 58 | a-1 (1.0) | b-2 (95.0) | 13 | 41 | 533 | A |
| | a-2 (4.0) | | | | | |
| Example 59 | a-1 (4.0) | b-2 (95.0) | 23 | 37 | 851 | A |
| | a-2 (1.0) | | | | | |
| Example 60 | a-1 (10.0) | b-2 (80.0) | 18 | 39 | 702 | C |
| | a-2 (10.0) | | | | | |
| Example 61 | a-1 (2.5) | b-3 (95.0) | 18 | 39 | 702 | A |
| | a-2 (2.5) | | | | | |
| Example 62 | a-2 (2.5) | b-2 (95.0) | 9 | 28 | 252 | A |
| | a-3 (2.5) | | | | | |
| Example 63 | a-2 (5.0) | b-2 (90.0) | 9 | 28 | 252 | A |
| | a-3 (5.0) | | | | | |
| Example 64 | a-2 (10.0) | b-2 (80.0) | 9 | 28 | 252 | A |
| | a-3 (10.0) | | | | | |
| Example 65 | a-2 (2.5) | b-2 (95.0) | 13 | 40 | 520 | A |
| | a-6 (2.5) | | | | | |
| Example 66 | a-2 (2.5) | b-3 (95.0) | 13 | 40 | 520 | A |
| | a-6 (2.5) | | | | | |
| Example 67 | a-3 (2.5) | b-2 (95.0) | 12 | 26 | 312 | A |
| | a-6 (2.5) | | | | | |

**Table 4**

| | Composition (parts by weight) | | Thiol | | | Optical material |
|---|---|---|---|---|---|---|
| | Thiol compound | (b) compound | [NH₄⁺] µmol/kg | [SCN⁻] µmol/kg | [NH₄⁺] [SCN⁻] (µmol/kg)² | White turbidity |
| Comparative Example 1 | a-1 (5.0) | b-1 (95.0) | 162 | 308 | 49896 | D |
| Comparative Example 2 | a-1 (10.0) | b-1 (90.0) | 162 | 308 | 49896 | E |
| Comparative Example 3 | a-2 (5.0) | b-1 (95.0) | 364 | 400 | 145600 | E |
| Comparative Example 4 | a-2 (80.0) | b-1 (20.0) | 364 | 400 | 145600 | |
| Comparative Example 5 | a-2 (5.0) | b-2 (95.0) | 448 | 612 | 274176 | E |
| Comparative Example 6 | a-2 (10.0) | b-2 (90.0) | 448 | 612 | 274176 | E |
| Comparative Example 7 | a-2 (80.0) | b-2 (20.0) | 448 | 612 | 274176 | |
| Comparative Example 8 | a-2 (5.0) | b-3 (95.0) | 364 | 400 | 145600 | E |
| Comparative Example 9 | a-3 (5.0) | b-2 (95.0) | 223 | 356 | 79388 | E |
| Comparative Example 10 | a-4 (5.0) | b-2 (95.0) | 386 | 454 | 175244 | E |
| Comparative Example 11 | a-5 (5.0) | b-2 (95.0) | 274 | 520 | 142480 | E |
| Comparative Example 12 | a-6 (5.0) | b-2 (95.0) | 637 | 413 | 263081 | E |
| Comparative Example 13 | a-1 (2.5) | b-2 (95.0) | 263 | 354 | 93102 | E |
| | a-2 (2.5) | | | | | |
| Comparative Example 14 | a-2 (2.5) | b-2 (95.0) | 294 | 378 | 110943 | E |
| | a-3 (2.5) | | | | | |
| Comparative Example 15 | a-3 (2.5) | b-2 (95.0) | 430 | 385 | 165335 | E |
| | a-6 (2.5) | | | | | |

Explanation of abbreviations of compounds in Tables 1 to 4
a-1: pentaerythritol tetrakis(3-mercaptopropionate)
a-2: 1,3-bis(mercaptomethyl)benzene
a-3: 1,2-bis[(2-mercaptoethyl)thio]-3-mercaptopropane
a-4: bis(mercaptoethyl) sulfide
a-5: 2,5-bis(mercaptomethyl)-1,4-dithiane
a-6: 1,1,3,3-tetrakis(mercaptomethylthio)propane
b-1: bisphenol F diglycidyl ether
b-2: bis(β-epithiopropyl)sulfide
b-3: bis(β-epithiopropyl)disulfide

## Claims

1. A composition for optical materials which comprises: a polythiol compound satisfying any one of the following i) to iii)
i) the compound has an ammonium cation concentration of 0.1 to 150 µmol/kg,
ii) the compound has a thiocyanate anion concentration of 0.1 to 300 µmol/kg, and
iii) the compound has an ammonium cation concentration of 0.1 to 150 µmol/kg and a thiocyanate anion concentration of 0.1 to 300 µmol/kg, the product of the ammonium cation concentration and the thiocyanate anion concentration being 0.01 to 15000 (µmol/kg)²;
and a polyepoxy compound and/or a polyepisulfide compound.

2. The composition for optical materials according to claim 1, wherein the polythiol compound is at least one compound selected from the group consisting of pentaerythritol tetrakis(3-mercaptopropionate), 1,2-bis[(2-mercaptoethyl)thio]-3-mercaptopropane, bis(mercaptomethyl)-3,6,9-trithia-1,11-undecanedithiol, bis(mercaptomethyl) sulfide, bis(mercaptoethyl) sulfide, 1,3-bis(mercaptomethyl)benzene, 1,4-bis(mercaptomethyl)benzene, 1,1,3,3-tetrakis(mercaptomethylthio)propane and 2,5-bis(mercaptomethyl)-1,4-dithiane.

3. A method for producing a composition for optical materials, which comprises mixing a polythiol compound satisfying any one of the following i) to iii):
i) the compound has an ammonium cation concentration of 0.1 to 150 µmol/kg;
ii) the compound has a thiocyanate anion concentration of 0.1 to 300 µmol/kg; and
iii) the compound has an ammonium cation concentration of 0.1 to 150 µmol/kg and a thiocyanate anion concentration of 0.1 to 300 µmol/kg, the product of the ammonium cation concentration and the thiocyanate anion concentration being 0.01 to 15000 (µmol/kg)²;
with a polyepoxy compound and/or a polyepisulfide compound.

4. The method for producing a composition for optical materials according to claim 3, wherein the polythiol compound is at least one compound selected from the group consisting of pentaerythritol tetrakis(3-mercaptopropionate), 1,2-bis[(2-mercaptoethyl)thio]-3-mercaptopropane, bis(mercaptomethyl)-3,6,9-trithia-1,11-undecanedithiol, bis(mercaptomethyl) sulfide, bis(mercaptoethyl) sulfide, 1,3-bis(mercaptomethyl)benzene, 1,4-bis(mercaptomethyl)benzene, 1,1,3,3-tetrakis(mercaptomethylthio)propane and 2,5-bis(mercaptomethyl)-1,4-dithiane.

5. An optical material obtained by polymerizing the composition for optical materials according to claim 1 or 2.

## Patentansprüche

1. Zusammensetzung für optische Materialien, welche umfaßt:
eine Polythiolverbindung, welche einem der folgenden i) bis iii) genügt
i) die Verbindung weist eine Ammoniumkationenkonzentration von 0,1 bis 150 µmol/kg auf,
ii) die Verbindung weist eine Thiocyanatanionenkonzentration von 0,1 bis 300 µmol/kg auf, und
iii) die Verbindung weist eine Ammoniumkationenkonzentration von 0,1 bis 150 µmol/kg und eine Thiocyanatanionenkonzentration von 0,1 bis 300 µmol/kg auf, wobei das Produkt der Ammoniumkationenkonzentration und der Thiocyanatanionenkonzentration 0,01 bis 15 000 (µmol/kg)² beträgt;
und eine Polyepoxyverbindung und/oder eine Polyepisulfidverbindung.

2. Zusammensetzung für optische Materialien nach Anspruch 1, wobei die Polythiolverbindung mindestens eine Verbindung ist, ausgewählt aus der Gruppe, bestehend aus Pentaerythritoltetrakis(3-mercaptopropionat), 1,2-Bis[(2-mercaptoethyl)thio]-3-mercaptopropan, Bis(mercaptomethyl)-3,6,9-trithia-1,11-undecandithiol, Bis(mercaptomethyl)sulfid, Bis(mercaptoethyl)sulfid, 1,3-Bis(mercaptomethyl)benzol, 1,4-bis(mercaptomethyl)benzol, 1,1,3,3-Tetrakis(mercaptomethylthio)propan und 2,5-Bis(mercaptomethyl)-1,4-dithian.

3. Verfahren zur Herstellung einer Zusammensetzung für optische Materialien, welche das Mischen einer Polythiolverbindung, welche einem der folgenden i) bis iii) genügt:
i) die Verbindung weist eine Ammoniumkationenkonzentration von 0,1 bis 150 µmol/kg auf,
ii) die Verbindung weist eine Thiocyanatanionenkonzentration von 0,1 bis 300 µmol/kg auf, und
iii) die Verbindung weist eine Ammoniumkationenkonzentration von 0,1 bis 150 µmol/kg und eine Thiocyanatanionenkonzentration von 0,1 bis 300 µmol/kg auf, wobei das Produkt der Ammoniumkationenkonzentration und der Thiocyanatanionenkonzentration 0,01 bis 15 000 (µmol/kg)² beträgt,
mit einer Polyepoxyverbindung und/oder einer Polyepisulfidverbindung umfaßt.

4. Verfahren zur Herstellung einer Zusammensetzung für optische Materialien nach Anspruch 3, wobei die Polythiolverbindung mindestens eine Verbindung ist, ausgewählt aus der Gruppe, bestehend aus Pentaerythritoltetra-kis(3-mercaptopropionat), 1,2-Bis[(2-mercaptoethyl)thio]-3-mercaptopropan, Bis(mercaptomethyl)-3,6,9-trithia-1,11-undecandithiol, Bis(mercaptomethyl)-sulfid, Bis(mercaptoethyl)sulfid, 1,3-Bis(mercaptomethyl)benzol, 1,4-Bis(mercaptomethyl)benzol, 1,1,3,3-Tetrakis(mercaptomethylthio)propan und 2,5-Bis(mercaptomethyl)-1,4-dithian.

5. Optisches Material, erhalten durch Polymerisieren der Zusammensetzung für optische Materialien nach Anspruch 1 oder 2.

## Revendications

1. Composition de matériaux optiques qui comprend : un composé polythiol satisfaisant à l'un quelconque des i) à iii) suivants
i) le composé a une concentration en cations ammonium de 0,1 à 150 *µ*mol/kg,
ii) le composé a une concentration en anions thiocyanate de 0,1 à 300 *µ*mol/kg, et
iii) le composé a une concentration en cations ammonium de 0,1 à 150 *µ*mol/kg et une concentration en anions thiocyanate de 0,1 à 300 *µ*mol/kg, le produit de la concentration en cations ammonium et de la concentration en anions thiocyanate étant de 0,01 à 15 000 (*µ*mol/kg)² ;
et un composé polyépoxy et/ou un composé polyépisulfure.

2. Composition de matériaux optiques selon la revendication 1, dans laquelle le composé polythiol est au moins un composé sélectionné dans le groupe constitué du tétrakis(3-mercaptopropionate) de pentaérythritol, du 1,2-bis[(2-mercaptoéthyl)thio]-3-mercaptopropane, du bis(mercaptométhyl)-3,6,9-trithia-1,11-undécanedithiol, du sulfure de bis(mercaptométhyl), du sulfure de bis(mercaptoéthyl), du 1,3-bis(mercaptométhyl)benzène, du 1,4-bis(mercaptométhyl) benzène, du 1,1,3,3-tétrakis (mercaptométhylthio) propane et du 2,5-bis(mercap-tométhyl)-1,4-dithiane.

3. Procédé de production d'une composition de matériaux optiques, qui comprend le mélange d'un composé polyol satisfaisant à l'un quelconque des i) à iii) suivants :
i) le composé a une concentration en cations ammonium de 0,1 à 150 *µ*mol/kg ;
ii) le composé a une concentration en anions thiocyanate de 0,1 à 300 *µ*mol/kg ; et
iii) le composé a une concentration en cations ammonium de 0,1 à 150 *µ*mol/kg et une concentration en anions thiocyanate de 0,1 à 300 *µ*mol/kg, le produit de la concentration en cations ammonium et de la concentration en anions thiocyanate étant de 0,01 à 15 000 (*µ*mol/kg)² ;
avec un composé polyépoxy et/ou un composé polyépisulfure.

4. Procédé de production d'une composition de matériaux optiques selon la revendication 3, dans lequel le composé polythiol est au moins un composé sélectionné dans le groupe constitué du tétrakis(3-mercaptopropionate) de pentaérythritol, du 1,2-bis[(2-mercaptoéthyl)thio]-3-mercaptopropane, du bis(mercaptométhyl)-3,6,9-trithia-1,11-undécanedithiol, du sulfure de bis(mercaptométhyl), du sulfure de bis(mercaptoéthyl), du 1,3-bis(mercaptométhyl)benzène, du 1,4-bis(mercaptométhyl)benzène, du 1,1,3,3-tétrakis(mercaptométhylthio)propane et du 2,5-bis(mercaptométhyl)-1,4-dithiane.

5. Matériau optique obtenu par polymérisation de la composition de matériaux optiques selon la revendication 1 ou 2.
